# EUROPÄISCHE PATENTANMELDUNG

(11) **EP 3 023 774 A1**
(43) Veröffentlichungstag der Anmeldung: **25.05.2016**
(21) Anmeldenummer: 15177265.4
(22) Anmeldetag: 17.07.2015
(51) Int. Cl.: G01N 21/95, B65B 57/02, B65B 57/10

(54) **INSPEKTIONSVORRICHTUNG ZUR ÜBERWACHUNG VON PRODUKTIONSPROZESSEN**

(30) Priorität: 30.10.2014 DE 102014016135
(71) Anmelder: Seidenader Maschinenbau GmbH, 85570 Markt Schwaben (DE)
(72) Erfinder: WINTER, Johannes, 86579 Waidhofen (DE); GROSSER, Christian, 85551 Kirchheim (DE); HAGL, Michael, 83527 Kirchdorf (DE)
(74) Vertreter: Laufhütte, Dieter

(57) **Zusammenfassung**

Die vorliegende Erfindung betrifft eine Inspektionsvorrichtung zur Erkennung von fehlerhaften Produkten bei Produktionsprozessen wie sie beispielsweise in der abfüllenden pharmazeutischen Industrie Verwendung finden. Die Erfindung richtet sich ferner auf eine auf ein Inspektionssystem mit Inspektionsvorrichtung sowie auf ein entsprechendes Inspektionsverfahren. Aufgabe ist die Menge fälschlicherweise als Defekt inspizierter Produkte zu verringern. Die Aufgabe wird dadurch gelöst, dass eine Bilderfassungseinheit dazu eingerichtet ist zumindest ein erstes Bild eines ersten Objekts (O5) und zumindest ein zweites Bild eines zweiten Objekts (O4) zu erfassen, und dass eine Bildverarbeitungseinheit dazu eingerichtet ist auf der Grundlage eines Vergleiches des ersten un des zweiten Bildes die Anwesenheit wenigstens eines Fehlers (F) im ersten und/oder im zweiten Objekt zu bestimmen.

## Beschreibung

Die vorliegende Erfindung betrifft eine Inspektionsvorrichtung zur Erkennung von fehlerhaften Produkten bei Produktionsprozessen wie sie beispielsweise in der abfüllenden pharmazeutischen Industrie Verwendung finden. Die Erfindung richtet sich ferner auf ein Inspektionssystem mit Inspektionsvorrichtung sowie auf ein entsprechendes Inspektionsverfahren.

Vollautomatische, auf Bildverarbeitung basierende Inspektionssysteme werden in einer Vielzahl von technischen Bereichen, wie beispielsweise der pharmazeutischen Industrie, der Getränkeindustrie oder auch der Halbleiterindustrie eingesetzt, um fehlerhafte Produkte zu erkennen und um sie aus dem weiteren Wertschöpfungsprozess, der z.B. das Verpacken, Abfüllen oder Ausliefern der Produkte umfassen kann, auszuschleusen.

Dabei sind auch vollautomatische Inspektionslösungen für die abfüllende pharmazeutische Industrie bekannt. Je nach Maschinentyp, -größe, - ausführung und Anforderungen der Kunden, können dabei die verwendeten Maschinen beziehungsweise Vorrichtungen mit mehreren Kameras, Bildverarbeitungseinheiten und dem zugehörigen optischen Komponenten ausgestattet sein. Gattungsgemäß ist es dabei Aufgabe der Vorrichtung, gute Produkte von schlechten zu trennen, wobei beispielsweise fehlerhafte Produkte ausgeworfen werden sollen und gute Produkte von dem verwendeten System akzeptiert werden sollen. Die Bildverarbeitung kann sich dabei auf Standardalgorithmen aus Standardbibliotheken sowie auch auf Algorithmen stützen, die nicht von der Standardalgorithmenbibliothek abgedeckt werden.

Die inspizierten Produkte können dabei beispielsweise in transparenten Glasbehältnissen wie z.B. Vials, Ampullen aus Klar- oder Buntglas bzw. Braunglas, abgefüllt sein. Bei den Füllungen der Glasbehältnisse kann es sich beispielsweise um Flüssigkeiten oder gefriergetrockneten Kuchen unterschiedlicher Färbung, Viskosität, Volumen usw. handeln. Es ist bekannt, dass der Verwender des Inspektionssystems beziehungsweise der Inspektionsvorrichtung Fehlerkategorien wie z.B. Seitenwand-, Boden- oder Partikelfehler am Behältnis definiert, die mit Hilfe der Inspektionsvorrichtung detektiert werden sollen.

Um Fehler bei den Produkten zu detektieren, werden beispielsweise Kamerastationen bereitgestellt oder aus einem Pool ausgewählt, der Standardstationen umfasst oder kundenspezifische Sonderstationen. Diese Stationen können aus einem optischen Sensor oder aus mehreren optischen Sensoren bestehen, den zugehörigen optischen Komponenten sowie einer Recheneinheit zur Auswertung der von den optischen Sensoren gewonnenen Signale. Hierbei ist es möglich, zwischen Stationen mit Mehr- und Einzelaufnahmen pro Produkt zu unterscheiden. Beispiele für Stationen mit Mehraufnahmen sind Partikel- oder Seitenwandstationen. Beispiele für Stationen mit Einzelaufnahmen sind Boden- oder Kappenstationen.

Problematisch an aus dem Stand der Technik bekannten Vorrichtungen ist, das Verunreinigungen im Bildfeld des optischen Sensors oder der optischen Sensoren, wie beispielsweise Staubpartikel, Fasern oder ähnliches, fälschlicherweise dazu führen können, dass die zu inspizierenden Produkte als fehlerhaft erkannt werden. Dieses fälschlicherweise als defekt inspizierte Produkt, auch "false reject" genannt, führt, je nach Menge und Wert der false rejects, unter Umständen zu erheblichen Kosten für das produzierende Unternehmen.

Auch statische Verunreinigungen im Bildfeld des optischen Sensors, wie z.B. Verunreinigungen auf Beleuchtungskomponenten, Spiegeln oder Glasscheiben, die sich bei jeder Aufnahme an genau oder annähernd derselben Position befinden, können unter Verwendung der aktuellen Methodik zu false rejects führen.

Aufgrund der vorliegenden Erfindung ist daher, eine verbesserte Inspektionsvorrichtung bereitzustellen, bei der die Menge fälschlicherweise als defekt inspizierter Produkte verringert ist.

Diese Aufgabe wird durch eine Inspektionsvorrichtung mit den Merkmalen des Anspruchs 1 gelöst, umfassend wenigstens eine Bilderfassungseinheit, die dazu eingerichtet ist, zumindest ein erstes Bild eines ersten Objekts, und zumindest ein zweites Bild eines zweiten Objekts zu erfassen; und eine Bildverarbeitungseinheit, die dazu eingerichtet ist, auf der Grundlage eines Vergleiches des ersten und des zweiten Bildes die Anwesenheit wenigstens eines Fehlers im ersten und/oder zweiten Objekt zu bestimmen.

Dabei kann die Inspektionsvorrichtung aus einem oder mehreren optischen Sensoren wie z.B. CCD/CMOS-Kameras bestehen und mit weiteren, auch optischen Komponenten wie z.B. Objektiven, Spiegeln und/oder Signalleitungen ausgestattet sein. Ferner kann die Inspektionsvorrichtung einen Rechner für eine rechnergestützte Auswertung der vom Sensor oder von den Sensoren aufgenommenen Analogen oder digitalen Signale umfassen. Der Begriff Objekt kann sich auf einen produzierten Gegenstand bzw. auf ein Produkt beziehen. Da die vorliegende Erfindung insbesondere zum Erkennen statischer Verunreinigungen geeignet ist, kann sie auch als dynamische Maske zur Erkennung statischer Verunreinigungen bezeichnet werden.

Dadurch, dass zwei Objekte miteinander verglichen werden, ist es möglich Unterschiede und Gemeinsamkeiten der beiden Objekte auszuwerten und auf dieser Grundlage eine bessere Entscheidung zu treffen, ob ein Gutteil oder ein Schlechtteil erfasst bzw. verglichen wurde.

In einem besonders bevorzugten Ausführungsbeispiel ist denkbar, dass die Bildverarbeitungseinheit dazu eingerichtet ist, die Anwesenheit des Fehlers durch eine Subtraktion des ersten Bildes von dem zweiten Bild zu bestimmen.

Werden die beiden Bilder subtrahiert, so werden dadurch die Unterschiede zwischen den beiden Bildern errechnet und somit der Vergleich der beiden Bilder besonders einfach durchgeführt.

In einem weiteren bevorzugten Ausführungsbeispiel ist denkbar, dass die Bildverarbeitungseinheit dazu eingerichtet ist, die Anwesenheit des Fehlers im ersten Objekt und/oder im zweiten Objekt zu bestimmen, wenn das Resultat der Subtraktion mindestens ein positives Merkmal umfasst. Wird also bei der Subtraktion wenigstens ein Bereich ermittelt, der keinen Nullwert aufzeigt, so ist dies ein Kriterium für die Anwesenheit eines entsprechenden Fehlers in dem entsprechenden Bereich des Produkts.

In einem weiteren bevorzugten Ausführungsbeispiel ist denkbar, dass die Bildverarbeitungseinheit dazu eingerichtet ist, vor der Subtraktion die Dicke der Konturen des ersten Bildes und/oder des zweiten Bildes zu vergrößern. Hierdurch ist es vorteilhaft möglich, bei Durchführung einer Inspektion etwaige Unschärfen der verglichenen Bilder aufgrund von beispielsweise minimalen Positionsänderungen der erfassten Objekte auszugleichen.

In einem weiteren bevorzugten Ausführungsbeispiel ist denkbar, dass die Bildverarbeitungseinheit eine Speichereinheit umfasst, wobei die Bilderfassungseinheit dazu eingerichtet ist, das erste Bild und das zweite Bild an zwei unterschiedlichen Zeitpunkten zu erfassen, und/oder die Speichereinheit dazu eingerichtet ist, wenigstens das erste Bild zu speichern, vorzugsweise zumindest bis das zweite Bild erfasst worden ist oder umgekehrt.

In einem weiteren bevorzugten Ausführungsbeispiel ist denkbar, dass die Bilderfassungseinheit dazu eingerichtet ist, das erste Bild und das zweite Bild mit der im Wesentlichen gleichen optischen Konfigurationen zu erfassen. In einer weiteren Ausführungsform ist es auch denkbar, dass die Bilderfassungseinheit dazu eingerichtet ist, ein drittes Bild eines dritten Objekts zu erfassen; dass die Bildverarbeitungseinheit dazu eingerichtet ist, auf der Grundlage eines Vergleichs des zweiten und dritten Bildes die Abwesenheit des Fehlers im zweiten Objekt zu bestimmen; und/oder dass die Bildverarbeitungseinheit (23) dazu eingerichtet ist, auf der Grundlage eines Vergleichs des ersten (B1) und dritten (B3) Bildes die Abwesenheit des Fehlers (F) im ersten Objekt (O1) zu bestimmen.

Wurde von der Inspektionsvorrichtung nämlich fälschlicherweise ein Fehler beispielsweise im zweiten Objekt bestimmt, so ist es im genannten Vergleich mit einem dritten Objekt möglich festzustellen, ob es sich bei dem ursprünglichen Fehler nicht um eine beispielsweise neu aufgetauchte dauerhafte Verschmutzung im entsprechenden Bereich der untersuchten Objekte handelt.

Besonders bevorzugt ist eine Ausführungsform, in der die Bildverarbeitungseinheit dazu eingerichtet ist, die Abwesenheit des Fehlers durch eine Subtraktion des ersten oder zweiten Bildes von dem dritten Bild oder umgekehrt zu bestimmen. Analog zum ersten Vergleich kann so aufgrund von Unterschieden zwischen den Bildern auf eventuelle Fehler oder dauerhafte Verschmutzungen geschlossen werden.

In einem besonders bevorzugten Ausführungsbeispiel ist dabei denkbar, dass die Bildverarbeitungseinheit dazu eingerichtet ist, die Abwesenheit des Fehlers im ersten und/oder zweiten Objekt zu bestimmen, wenn das Resultat der Subtraktion keine positiven Merkmale umfasst.

Die vorliegende Erfindung richtet sich auch auf ein Inspektionssystem, umfassend die Inspektionsvorrichtung nach einem der Ansprüche 1 - 9, eine Bewegungseinheit, die dazu eingerichtet ist, die Objekte zu bewegen, und einen Entferner, der dazu eingerichtet, Objekte zu entfernen, bei welchen die Inspektionsvorrichtung die Anwesenheit eines Fehlers bestimmt.

Die vorliegende Erfindung richtet sich ferner auf ein Inspektionsverfahren zur Erkennung von fehlerhaften Produkten bei Produktionsprozessen, umfassend die Schritte:
- Erfassen wenigstens eines ersten Bildes eines ersten Objekts und wenigstens eines zweiten Bilde eines zweiten Objekts;
- Speichern wenigstens eines der zuvor erfassten Bilder; und
- Bestimmung der Anwesenheit wenigstens eines Fehlers durch Subtraktion der beiden Bilder.

In besonderer Ausgestaltung kann dabei das Verfahren die Anwesenheit eines Fehlers dadurch bestimmen, dass das Resultat der Subtraktion mindestens ein positives Merkmal umfasst. In einer weiteren Ausgestaltung kann das Verfahren vor der Subtraktion die Dicke der Konturen des ersten Bildes und/oder des zweiten Bildes vergrößern oder anderweitig modifizieren. Das Verfahren kann dabei in einem bevorzugten Ausführungsbeispiel zur Durchführung mittels einer Vorrichtung nach einem der Ansprüche 1 bis 9 und/oder mittels eines Inspektionssystems nach Anspruch 10 ausgelegt sein.

Weitere Vorteile und Einzelheiten der Erfindung werden anhand der Figuren aufgezeigt. Dabei zeigen:
- Figur 1:: Schematische Darstellung eines Inspektionssystems;
- Figur 2:: Sequenz von Bildaufnahmen einer Inspektion;
- Figur 3:: Schematische Darstellung einer Inspektionsvorrichtung;
- Figur 4:: Schematischer Ablauf einer Inspektion;
- Figur 5:: Schema einer Bildsubtraktion;
- Figur 6:: Schema einer zweiten Bildsubtraktion;
- Figur 7:: Schema einer dritten Bildsubtraktion;
- Figur 8:: Schema einer vierten Bildsubtraktion; und
- Figur 9:: Schema einer fünften Bildsubtraktion.

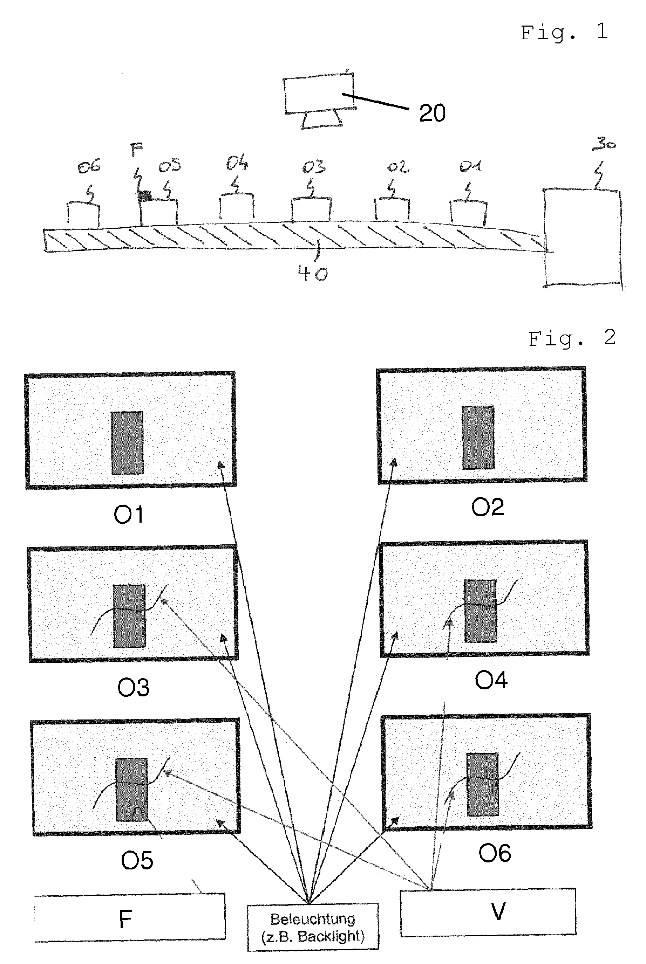

Figur 1 zeigt eine schematische Darstellung eines Inspektionssystems, bei dem eine Inspektionsvorrichtung 20 mit entsprechender, im Weiteren gezeigter Bilderfassungseinheit 21 auf zu inspizierende Objekte O1 - 06 ausgerichtet ist.

Eine Mehrzahl von zu inspizierenden Objekten 01-06 befindet sich dabei beispielsweise auf einer Bewegungseinheit 40, die z.B. als Förderband oder auch als Sternrad ausgebildet sein kann.

Die Bewegungseinheit 40 bewegt im gezeigten Ausführungsbeispiel die zu inspizierenden Objekte 01-06 an der Inspektionsvorrichtung 20 vorbei. In der in Figur 1 gezeigten Situation befindet sich dabei ein drittes Objekt 03 im Fokus der Inspektionsvorrichtung 20.

Die Objekte 01-06 werden im Vorbeifahren an der Inspektionsvorrichtung 20 von dieser inspiziert und je nach Befund vom sich an die Inspektionsvorrichtung 20 anschließenden Entferner 30 entweder von der Bewegungseinheit 40 entfernt und damit vom weiteren Bearbeitungsprozess entfernt, oder auf der Bewegungseinheit 40 zum weiteren Bearbeiten belassen. Wie dabei zu erkennen ist, weist das fünfte Objekt 05 einen mit dem Buchstaben F bezeichneten Fehler auf, welcher erfindungsgemäß von der Vorrichtung erfasst wird.

Figur 2 zeigt eine Sequenz von Bildaufnahmen bzw. Bildern B1 - B6 der entsprechenden Produkte bzw. Objekte O1 - 06. Die Skizzen zeigen exemplarisch und vereinfacht den Aufbau einer Seitenwandstation, wobei das Prinzip der statischen Verunreinigungsmaske bei jeder bildverarbeitungsgestützten optischen Kontrolle einsetzbar ist.

In der Figur 2 sind dabei die Bilder bzw. Aufnahmen B1-B6 der entsprechenden Objekte 01 bis 06 gezeigt, die von der Inspektionsvorrichtung 20 wie in Figur 1 dargestellt beispielsweise von oben aufgenommen worden sind.

Die Objekte 01 und 02 weisen dabei keine Beeinträchtigungen auf. Objekte 03 bis 06 dagegen weisen eine mit dem Buchstaben V bezeichnete Verschmutzung auf, die in der Figur 2 als schräg geschwungen verlaufender Strich angezeigt ist.

Entsprechend zur Darstellung der Figur 1 weist Objekt 05 der Figur 2 einen mit dem Buchstaben F bezeichneten Fehler des Objekts 05 auf.

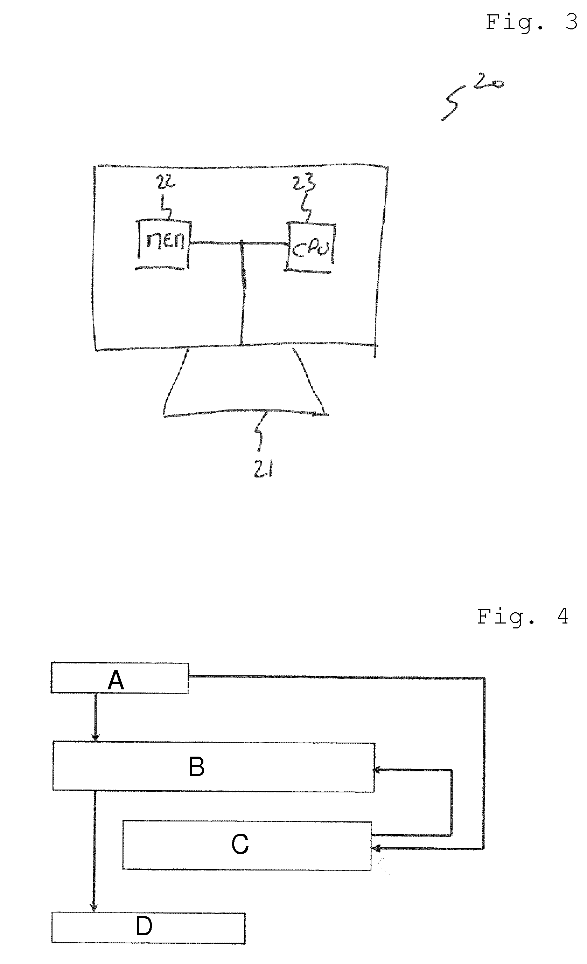

Figur 3 zeigt eine schematische Darstellung der vorher genannten Inspektionsvorrichtung 20, bei der zusätzlich zur Bilderfassungseinheit 21 eine Speichereinheit 22 und eine Bildverarbeitungseinheit 23 vorgesehen sind. Mittels der genannten Komponenten ist eine erfindungsgemäße Inspektion beziehungsweise Bildverarbeitung möglich.

Das Schema der Figur 4 zeigt den Ablauf einer Inspektion, bei der im Schritt A ein Kamerabild erstellt wird beziehungsweise eine Bilderfassung erfolgt. Das Kamerabild kann nun im Schritt C zwischengespeichert werden, sodass, wenn mehrere Objekte inspiziert werden, entsprechend Bilder wenigstens zweier Objekte miteinander im Schritt B verglichen werden können. Im Schritt B werden Bildverarbeitungsalgorithmen zu Be- bzw. Verarbeitung der gespeicherten bzw. aufgenommenen Bildinformationen durchgeführt bzw. durchgerechnet.

Schritt D schließlich betrifft die Ausgabe des Ergebnisses, d.h. eine Aussage ob ein Fehler bei einem erfassten Objekt vorliegt oder nicht und ggf. eine entsprechende Aussonderung des betroffenen Objektes.

Dabei kann vor oder während der Inspektion eines aktuell inspizierten Produktes die Aufnahme des Vorgängerprodukts subtrahiert werden. Alternativ oder zusätzlich werden Nachbearbeitungen mit geeigneten Algorithmen durchgeführt, bevor die Bilder zweier Produkte miteinander verrechnet bzw. verglichen werden.

Im Folgenden wird eine Beschreibung der Funktionsweise anhand der in Figur 2 gezeigten Sequenz von Produktbildern mit unterschiedlichen Ausgangsvoraussetzungen an einer Station mit Einzelaufnahme erläutert.

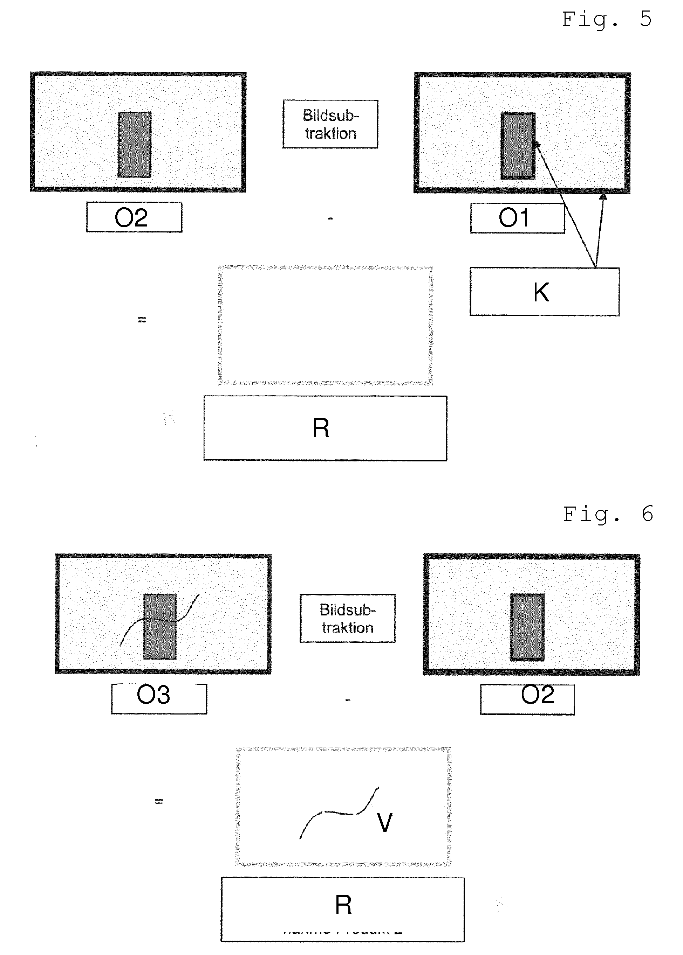

Figur 5 zeigt, dass von einem zu inspizierenden, fehlerfreien Produkt 02, die Aufnahme des gerade eben inspizierten, fehlerfreien Produkt 01 subtrahiert wird, wobei als Resultat R ein Nullwert ausgegeben wird. Das heißt, es bleibt kein Rest, beide Bilder bzw. deren digitale Repräsentationen heben sich auf. Es gibt keine Auswirkung auf die Inspektion, kein Fehler wird festgestellt.

Wie mit dem Buchstaben K angedeutet, werden Konturen und eventuelle Produktfehler oder Verunreinigungen im Bild des Objekts 01 mit Hilfe von Bildverarbeitungsfiltern vergrößert, um potenzielle minimale Positionsänderungen der Objekte auszugleichen.

Dieses Verfahren eignet sich sowohl für Inspektionsstationen mit einer Kameraaufnahme pro Produkt, als auch für Stationen mit mehreren Aufnahmen pro Produkt. Die Methodik ist sowohl für eine komplette, als auch eine bereichsweise Verarbeitung der Bildinformationen verwendbar.

Figur 6 zeigt das Schema einer Bildsubtraktion eines fehlerfreien dritten Produkts 03 mit einer Verunreinigung V im Bildfeld, wobei von dem Bild B3 des Objekts 03 das Bild B2 des fehlerfreien Objekts 02 abgezogen wird.

Zieht man, wie in Figur 6 gezeigt, von einem zu inspizierenden, fehlerfreien Objekt 03 mit Verunreinigung V im Bildfeld, die Aufnahme des gerade eben inspizierten fehlerfreien Objekts 02 ohne Verunreinigung ab, bleibt als Resultat R die Verunreinigung V mit Unterbrechungen an den Behältnisgrenzen als Rest R. Objekt 03 wird aufgrund der Verunreinigung V als fehlerhaft erkannt und aus dem weiteren Produktionsprozess fälschlicherweise entfernt. Das eigentlich fehlerfreie Objekt 03 würde aufgrund der Verunreinigung V unabhängig davon, ob der aktuelle Stand der Technik oder die Erfindung verwendet wird, ausgeworfen werden.

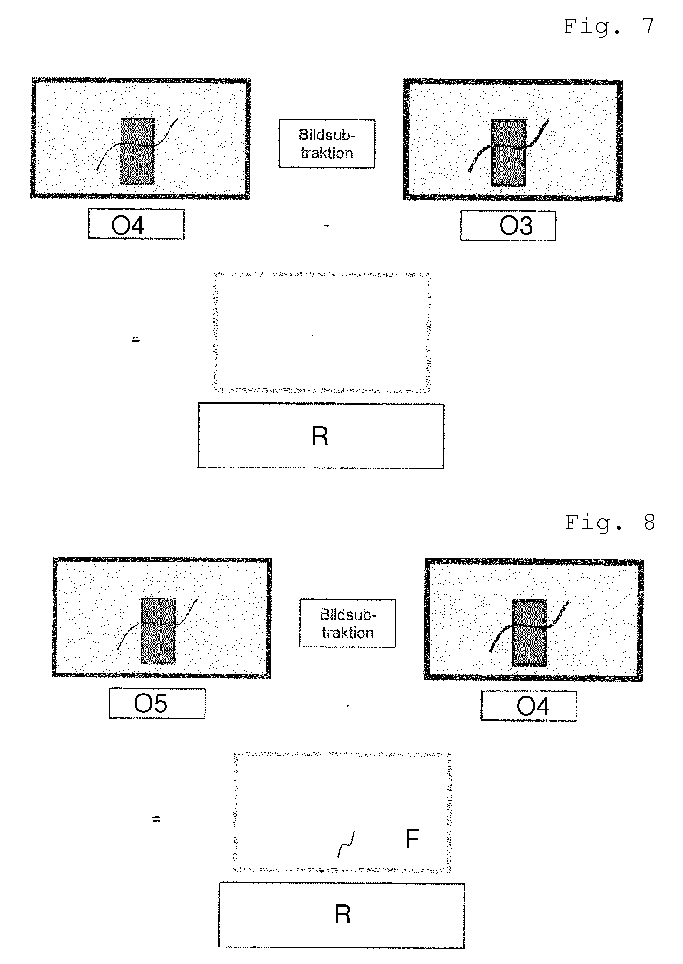

Figur 7 zeigt das Schema einer Bildsubtraktion eines fehlerfreien Objekts 03 mit Verunreinigung V im Bildfeld, wobei das Bild eines anderen fehlerfreien Objekts 04 ebenfalls mit Verunreinigung V im Bildfeld abgezogen wird. Bei einer derartigen Subtraktion zwischen einem zu inspizierenden, fehlerfreien Objekt 04 mit Verunreinigung V im Bildfeld und eines gerade eben inspizierten, fehlerfreien Objekts 03 mit Verunreinigung V, bleibt kein Rest R. Objekt 04 wird aufgrund der Erfindung als gut akzeptiert, es erfolgt keine Ausschleusung aus dem weiteren Produktionsprozess, die false reject Rate bleibt konstant und erhöht sich nicht.

Figur 8 zeigt das Schema einer Bildsubtraktion eines fehlerhaften Objekts 05 mit Verunreinigung im Bildfeld, wobei das Bild eines fehlerfreien Objekts 04 mit Verunreinigung V im Bildfeld abgezogen wird. Wie im Resultat R zu erkennen ist, verschwindet die Verunreinigung V durch die Subtraktion, der Fehler F auf dem Objekt 05 bleibt erhalten und kann detektiert werden.

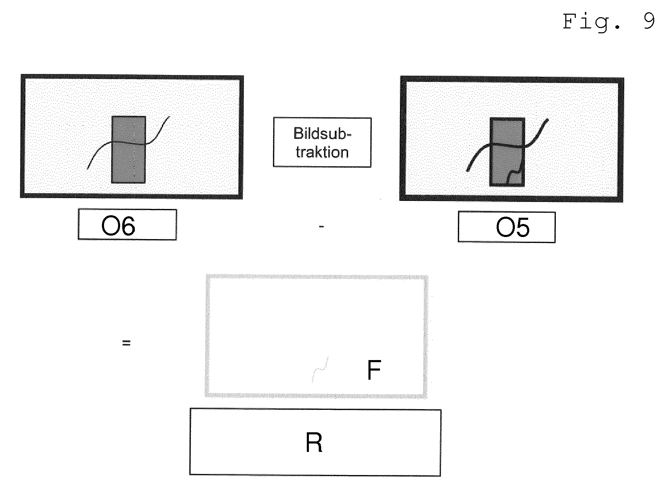

Figur 9 zeigt das Schema einer Bildsubtraktion eines fehlerfreien Objekts 06 mit Verunreinigung V im Bildfeld wobei das Bild eines fehlerhaften Objekts 05 mit Verunreinigung V im Bildfeld abgezogen wird. Wie im Resultat R zu erkennen ist, verschwindet die Verunreinigung, es besteht aber die Gefahr, dass sich ein Defekt in Objekt 06, der sich an derselben Stelle, wie bei dem Bildfeld zu Objekt 05 befindet, ebenfalls subtrahiert wird und deshalb nicht detektiert werden kann. Diese Gefahr besteht hauptsächlich bei einem Bildfeld zu stark verunreinigten Vorgängerobjekten. Erfindungsgemäß ist es somit möglich, false rejects in optischen Inspektionssystemen zu vermeiden, welche durch Verunreinigungen verursacht werde können. Auch ist ferner eine Auswertung des Verunreinigungsgrades der Bildfelder denkbar, wodurch Wartungs- bzw. Reinigungsempfehlungen ausgesprochen werden können.

## Patentansprüche

1. Inspektionsvorrichtung (20), umfassend wenigstens eine Bilderfassungseinheit (21), die dazu eingerichtet ist, zumindest ein erstes Bild (B1) eines ersten Objekts (O1), und zumindest ein zweites Bild (B2) eines zweiten Objekts (02) zu erfassen; und eine Bildverarbeitungseinheit (23), die dazu eingerichtet ist, auf der Grundlage eines Vergleiches des ersten und des zweiten Bildes die Anwesenheit wenigstens eines Fehlers (F) im ersten und/oder zweiten Objekt zu bestimmen.

2. Inspektionsvorrichtung (20) nach Anspruch 1, **dadurch gekennzeichnet, dass** die Bildverarbeitungseinheit (23) dazu eingerichtet ist, die Anwesenheit des Fehlers (F) durch eine Subtraktion des ersten Bildes (B1) von dem zweiten Bild (B2) und/oder umgekehrt zu bestimmen.

3. Inspektionsvorrichtung (20) nach Anspruch 2, **dadurch gekennzeichnet, dass** die Bildverarbeitungseinheit (23) dazu eingerichtet ist, die Anwesenheit des Fehlers (F) im ersten Objekt (O1) und/oder im zweiten Objekt (02) zu bestimmen, wenn das Resultat der Subtraktion mindestens ein positives Merkmal umfasst.

4. Inspektionsvorrichtung (20) nach Anspruch 2 oder 3, **dadurch gekennzeichnet, dass** die Bildverarbeitungseinheit (23) dazu eingerichtet ist, vor der Subtraktion die Dicke der Konturen des ersten Bildes (B1) und/oder des zweiten Bildes (B2) zu vergrößern.

5. Inspektionsvorrichtung (20) nach einem der vorhergehenden Ansprüche, **dadurch gekennzeichnet, dass** die Bildverarbeitungseinheit (23) eine Speichereinheit (22) umfasst, wobei die Bilderfassungseinheit (21) dazu eingerichtet ist, das erste Bild (B1) und das zweite Bild (B2) an zwei unterschiedlichen Zeitpunkten zu erfassen, und/oder die Speichereinheit (22) dazu eingerichtet ist, wenigstens das erste Bild (B1) zu speichern, vorzugsweise zumindest bis das zweite Bild (B2) erfasst worden ist oder umgekehrt.

6. Inspektionsvorrichtung (20) nach einem der vorhergehenden Ansprüche, **dadurch gekennzeichnet, dass** die Bilderfassungseinheit (21) dazu eingerichtet ist, das erste Bild (B1) und das zweite Bild (B2) mit der im Wesentlichen gleichen optischen Konfiguration zu erfassen.

7. Inspektionsvorrichtung (20) nach einem der vorhergehenden Ansprüche, **dadurch gekennzeichnet, dass** die Bilderfassungseinheit (21) dazu eingerichtet ist, ein drittes Bild (B3) eines dritten Objekts (03) zu erfassen; dass die Bildverarbeitungseinheit (23) dazu eingerichtet ist, auf der Grundlage eines Vergleichs des zweiten (B2) und dritten (B3) Bildes die Abwesenheit des Fehlers (F) im zweiten Objekt (02) zu bestimmen; und/oder dass die Bildverarbeitungseinheit (23) dazu eingerichtet ist, auf der Grundlage eines Vergleichs des ersten (B1) und dritten (B3) Bildes die Abwesenheit des Fehlers (F) im ersten Objekt (O1) zu bestimmen.

8. Inspektionsvorrichtung (20) nach Anspruch 7, **dadurch gekennzeichnet, dass** die Bildverarbeitungseinheit (23) dazu eingerichtet ist, die Abwesenheit des Fehlers (F) durch eine Subtraktion des ersten und/oder zweiten Bildes (B1, B2) von dem dritten Bild (B3) oder umgekehrt zu bestimmen.

9. Inspektionsvorrichtung (20) nach Anspruch 8, **dadurch gekennzeichnet, dass** die Bildverarbeitungseinheit (23) dazu eingerichtet ist, die Abwesenheit des Fehlers (F) im ersten und/oder zweiten Objekt (O1, O2) zu bestimmen, wenn das Resultat der Subtraktion keine positiven Merkmale umfasst.

10. Inspektionssystem, umfassend die Inspektionsvorrichtung (20) nach einem der vorhergehenden Ansprüche, eine Bewegungseinheit (40), die dazu eingerichtet ist, die Objekte zu bewegen, und einen Entferner (30), der dazu eingerichtet ist, Objekte zu entfernen, bei welchen die Inspektionsvorrichtung (20) die Anwesenheit eines Fehlers (F) bestimmt.

11. Inspektionsverfahren zur Erkennung von fehlerhaften Produkten bei Produktionsprozessen, umfassend die Schritte:
• Erfassen wenigstens eines ersten Bildes (B1) eines ersten Objekts (O1) und wenigstens eines zweiten Bildes (B2) eines zweiten Objekts (02);
• Speichern wenigstens eines der zuvor erfassten Bilder (B1, B2); und
• Bestimmung der Anwesenheit wenigstens eines Fehlers (F) durch Subtraktion der beiden Bilder (B1, B2).

12. Inspektionsverfahren nach Anspruch 11, **dadurch gekennzeichnet, dass** das Verfahren die Anwesenheit eines Fehlers (F) dadurch bestimmt, dass das Resultat der Subtraktion mindestens ein positives Merkmal umfasst.

13. Inspektionsverfahren nach Anspruch 11 oder 12, **dadurch gekennzeichnet, dass** das Verfahren vor der Subtraktion die Dicke der Konturen des ersten Bildes (B1) und/oder des zweiten Bildes (B2) vergrößert.

14. Inspektionsverfahren nach Anspruche 11, wobei das Verfahren zur Durchführung mittels einer Vorrichtung nach einem der Ansprüche 1 bis 9 und/oder mittels eines Inspektionssystems nach Anspruch 10 ausgelegt ist.
